# EUROPÄISCHE PATENTSCHRIFT

(11) **EP 0 690 065 B1**
(45) Veröffentlichungstag und Bekanntmachung des Hinweises auf die Patenterteilung: **02.10.2002**
(21) Anmeldenummer: 95109922.5
(22) Anmeldetag: 26.06.1995
(51) Int. Cl.: C07F 9/50, C07F 15/00, B01J 31/24, C07F 9/53

(54) **Halogenierte Biphenyl-2,2'diyl-bis-diphenylphosphine, ihre Herstellung und ihre Verwendung**
Halogenated biphenyl-2,2'-diyl-bis-diphenylphosphines, their preparation and use
Biphenyl-2,2'-diyl-bis-diphenylphosphines halogénées, leur préparation et leur utilisation

(30) Priorität: 30.06.1994 DE 4422672
(43) Veröffentlichungstag der Anmeldung: 03.01.1996
(73) Patentinhaber: HOECHST AKTIENGESELLSCHAFT, 65929 Frankfurt am Main (DE)
(72) Erfinder: Jendralla, Joachim-Heiner, Dr., D-65931 Frankfurt (DE)

(56) Entgegenhaltungen:
- EP-A- 0 398 132
- EP-A- 0 643 065
- US-A- 5 171 892
- TETRAHEDRON: ASYMMETRY (TASYE3,09574166);94; VOL.5 (7); PP.1297-320, HOECHST AG;ALLGEMEINE PHARM. FORSCH.; FRANKFURT/MAIN; D-65926/80; GERMANY (DE) Jendralla H et al 'Efficient synthesis of (R)- and (S)-(6,6'-difluorobiphenyl-2,2'-di yl) bis(diphenylphosphine);electron-poor biphenyl-type ligands for transition metal catalysts'

## Beschreibung

Die vorliegende Erfindung betrifft halogenierte Biphenyl-2,2'-diyl-bisdiphenylphosphine, ihre Herstellung und ihre Verwendung. Mono- und Diphosphine besitzen beträchtliche Bedeutung als Liganden in Übergangsmetall-katalysierten organischen Reaktionen. In den letzten Jahren haben insbesondere homochirale Mono- und Diphosphine großes Interesse als Liganden in Übergangsmetall-katalysierten enantioselektiven Reaktionen gefunden, z.B. in Rhodium(I)-, Ruthenium(II)- und Iridium(I)- katalysierten asymmetrischen Hydrierungen prochiraler Alkene, Ketone und Imine, in Palladium-katalysierten nucleophilen allylischen Substitutionen und Heck-Kupplungs-Reaktionen, in Rhodium(I)-katalysierten Hydrosilylierungen, Hydroborierungen und Hydroformylierungen von prochiralen Alkenen und Hydrosilylierungen von Ketonen und Iminen, als auch in Rhodium(I)-katalysierten asymmetrischen Isomerisierungen von Allylaminen zu den entsprechenden Enaminen.

Es ist auffällig, daß in den bekannten Anwendungen sowohl von achiralen Phosphinen in Übergangsmetall-katalysierten Reaktionen, als auch in allen oben genannten Beispielen für die Anwendung von homochiralen Phosphinen in der katalytischen asymmetrischen Synthese (Zassinovich et al., S.Chem.Rev. 1992, 92, 1051-1069, oder EP-A-398 132) und in tabellarischen Zusammenstellungen von ca. 200 unterschiedlichen homochiralen Phosphinen, Phosphiniten und Amidophosphinen, die in der asymmetrischen Synthese getestet wurden, alle eingesetzten Phosphine elektronenreich sind. Die genannten Phosphine haben den Nachteil, daß einige mit ihrer Hilfe katalysierte Reaktionen nur schlecht und insbesondere mit unzureichender Enantioselektivität ablaufen.

Weiterhin werden in der EP 0 643 065 A1, die ein Dokument im Sinne von Artikel 54(3) EPÜ ist, Verbindungen beschrieben, die den Verbindungen der vorliegenden Erfindung ähnlich sind.

Überraschenderweise wurde nun gefunden, daß bestimmte elektronenarme Systeme, wie halogenierte Biphenyl-2,2'-diyl-bis-diphenylphosphine, in einigen Übergangsmetall-katalysierten Reaktionen den konventionellen elektronenreichen Mono- und Diphosphinen bezüglich erzielter Reaktionsausbeute, katalytischer Aktivität bzw. Enantioselektivität überlegen sind.

Ein Gegenstand der vorliegenden Erfindung sind demzufolge die Verbindungen der Formel II 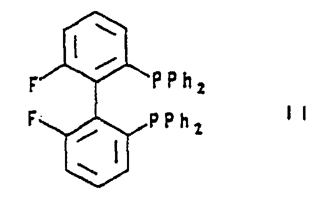 in der die Phenylringe des Biphenylmoleküls mit bis zu 6 zusätzlichen Fluor- und/oder Chloratomen substituiert sein können.

Bevorzugt sind die Verbindungen der Formel II in der die Phenylringe mit bis zu vier Fluor- undloder Chloratomen, insbesondere mit bis zu zwei Fluor- und/oder Chloratomen substituiert sind. Eine ganz besondere Bedeutung besitzen die Verbindungen der Formel II.

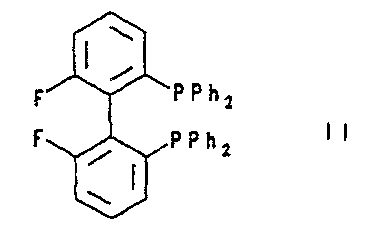

Die vorliegende Erfindung betrifft die genannten Verbindungen sowohl in der racemischen Form als auch in der chiralen Form, die durch die nachfolgenden Formeln, die ganz besonders bevorzugte Verbindungen zeigen, beispielhaft belegt werden sollen.

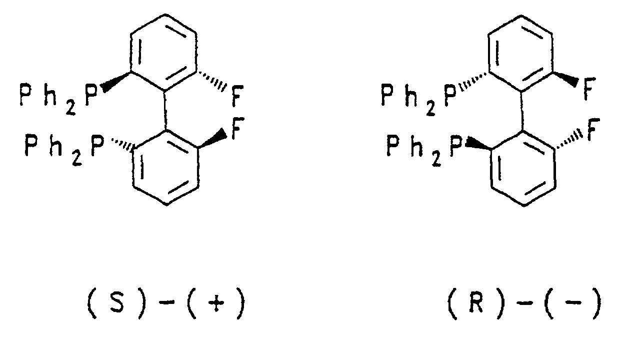

Ein weiterer Gegenstand der vorliegenden Erfindung ist das Verfahren zu Herstellung der Verbindungen der Formel II, das dadurch gekennzeichnet ist, daß eine Verbindung der Formel 4 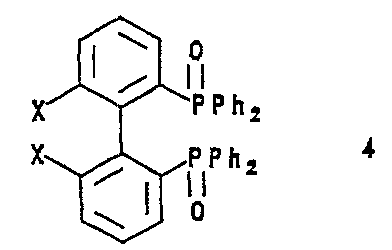 wobei X = F mit Cl₂Si(CH₃)H, NBu₃, in einem organischen Lösungsmittel, vorzugsweise Xylol unter Inertgas, vorzugsweise Stickstoff umgesetzt wird oder alternativ mit HSiCl₃ und NBu₃ in einem organischen Lösungsmittel, vorzugsweise Xylol, unter Rückfluß gekocht wird wobei die Verbindung der Formel II entsteht und wobei die Phenylringe des Biphenylmoleküls mit bis zu 6 zusätzlichen Fluor und/oder Chloratomen substituiert sein können.

Die als wichtiges Zwischenprodukt auftretenden Verbindungen der Formel 4 in chiraler und racemischer Form gehören ebenfalls zum Gegenstand der vorliegenden Erfindung. Weiterhin gehört zum Gegenstand der vorliegenden Erfindung das Verfahren zur Herstellung der Verbindung der Formel 4, das dadurch gekennzeichnet ist, daß eine Verbindung der Formel 3 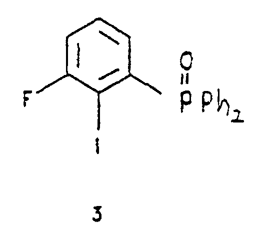 in einem inerten Lösungsmittel, vorzugsweise DMF, unter Zusatz eines Übergangsmetalls, vorzugsweise Cu, erhitzt wird, wobei die Verbindung der Formel 3 in 4-, 5- und/oder 6-Stellung mit bis zu 3 Fluor- und/oder Chloratomen substituiert sein kann.

Darüber hinaus gehört zum Gegenstand der vorliegenden Erfindung das Verfahren zur Herstellung der Verbindung der Formel 3, das dadurch gekennzeichnet ist, daß eine Verbindung der Formel 2 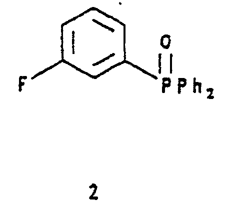 mit Lithiumdiisopropylamid in einem inerten Lösungsmittel, vorzugsweise in THF, und anschließend mit Jod umgesetzt wird, wobei die Verbindungen der Formeln 2 und 3 in 4-, 5- und/oder 6-Stellung mit bis zu 3 Fluor- und/oder Chloratomen substituiert sein können.

Ein Verfahren zur Herstellung erfindungsgemäßer Verbindungen ist unter Nennung bevorzugter Parameter nachfolgend schematisch dargestellt.

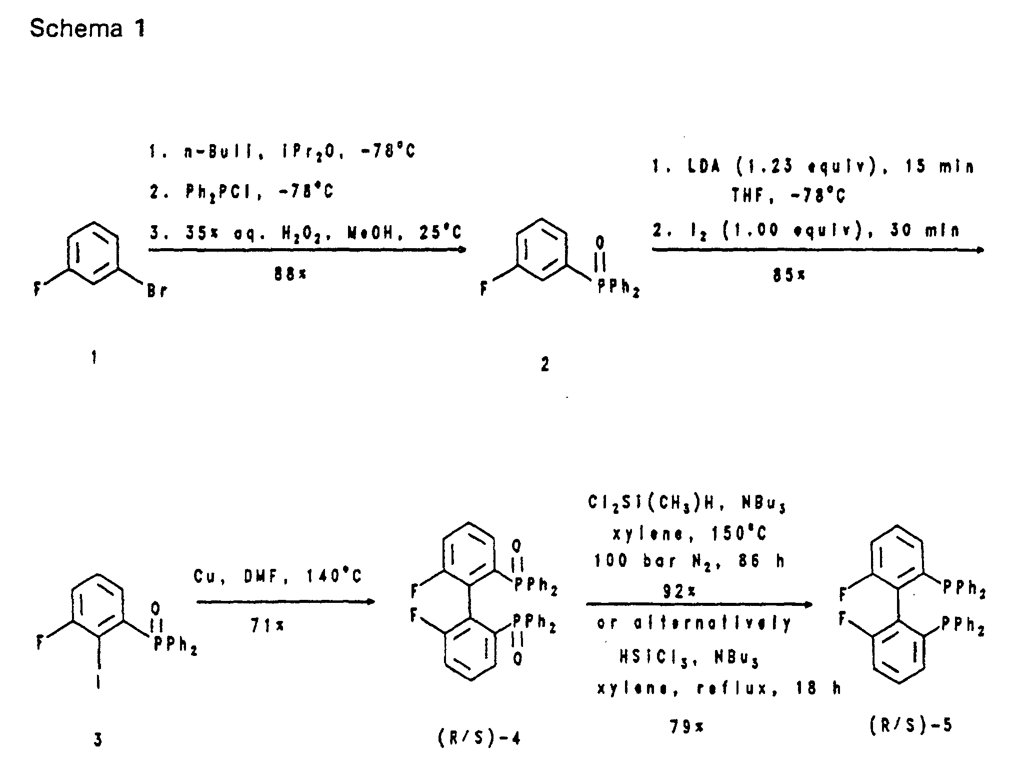

Die obengenannten Verfahren betreffen die racemischen Verbindungen. Die einzelnen chiralen Formen der genannten Verbindungen können durch übliche Racemattrennungsverfahren erhalten werden. Ein bevorzugtes Trennungsverfahren ist durch das nachfolgende Schema dargestellt. Die danach folgende Erläuterung erfindungsgemäßer Merkmale erfolgt unter Benutzung der numerischen Bezeichnung der Verbindungen aus Schema 2.

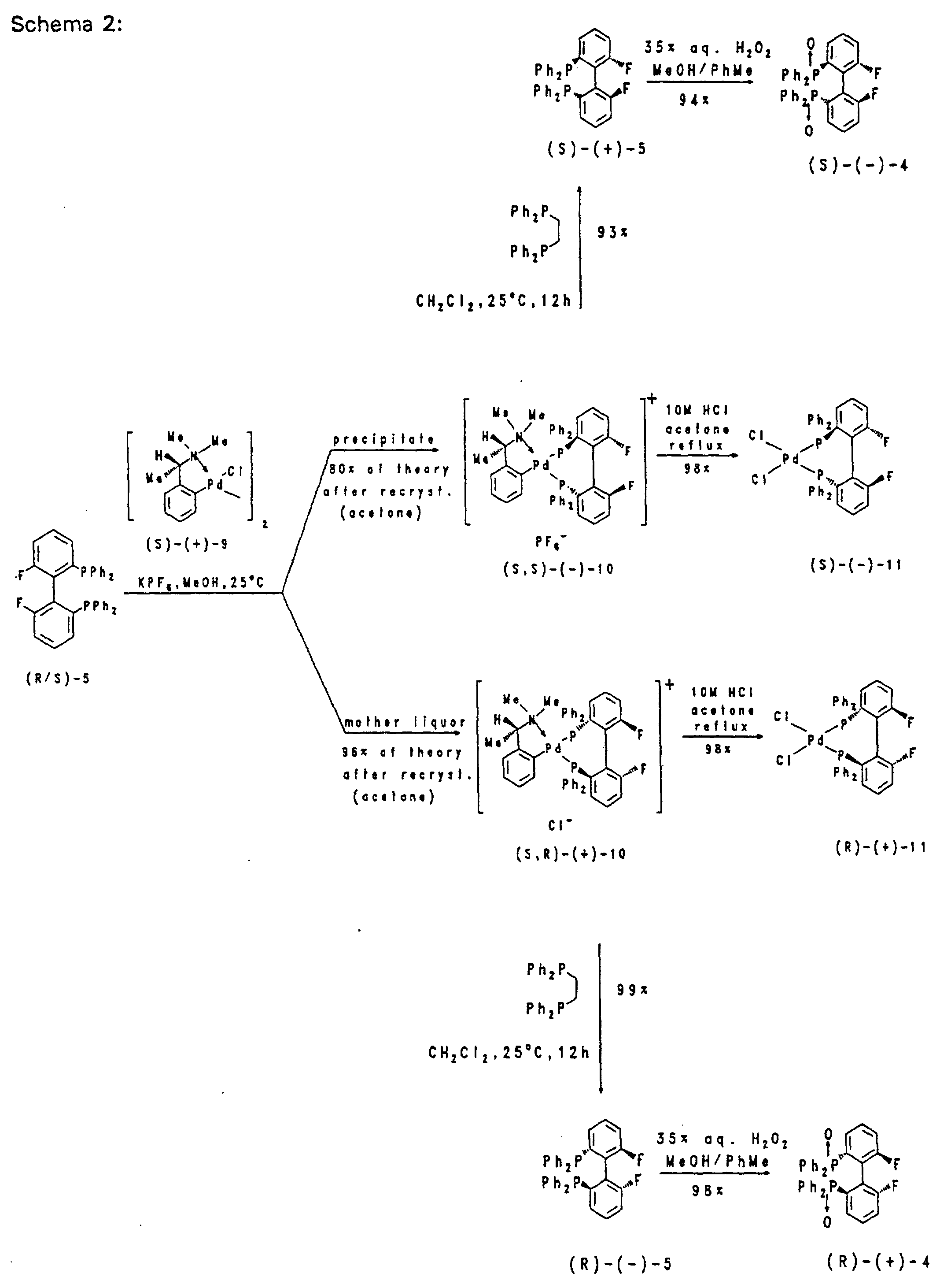

Die Racematspaltung von (R/S)-5 zu (S)-(+)-5 erfolgt mit 75% der theoretischen Ausbeute und zu (R)-(-)-5 mit 95% der theoretischen Ausbeute. Die zweifelsfreie Bestimmung der optischen Reinheit erfolgt durch Chiralphasen-HPLC-Analyse der entsprechenden Bis(phosphinoxide) (S)-(-)-4 und (R)-(+)-4. Die Absolutkonfiguration ist durch Einkristall-Röntgenstrukturanalyse von (S,S)-(-)-10 gesichert.

Zum Gegenstand der vorliegenden Erfindung gehören auch die Rh(I)-, Ru(II)-, Pd(II)- und Pd(0)-Komplexe der Verbindungen der Formel II,

Ihre Herstellung durch Umsetzung der Verbindungen der Formel II mit geeigneten Komplexen dieser Metalle mit leicht verdrängbaren Liganden gehört ebenfalls zum Gegenstand dieser Erfindung.

Als solche leicht verdrängbaren Liganden werden Z,Z-1,5-Cyclooctadien (COD), Norbornadien (NBD) oder Acetylacetonat (Acac) bevorzugt. Die entsprechenden Übergangsmetall-Komplexe sind kommerziell erhältlich oder können leicht auf bekannte Weise hergstellt werden. In den Beispielen dieser Anmeldung (siehe asymmetrische Hydrierung und asymmetrische Hydroborierung/Oxidation) finden sich konkrete Vorschriften für diese Vorgehensweise.
Die homochiralen Palladiumdichlorid-Komplexe mit Verbindungen der Formel II können auch, wie in Schema 2 gezeigt, durch HCl-induzierte Abspaltung des N,N-Dimethyl-alpha-Phenylethylamin-Liganden aus den diastereomeren Palladium-Komplexen der Formel 10 gewonnen werden.

Darüber hinaus ist ein Gegenstand der vorliegenden Erfindung die Verwendung der erfindungsgemäßen Verbindungen als Katalysatoren. Die erfindungsgemäßen Katalysatoren eignen sich insbesondere zur Katalyse organischer Additions-, Substitutions-, Umlagerungs- und Kupplungsreaktionen. Die optisch reinen Diphosphine 5 und ihre Palladiumdichlorid-Komplexe 11 sind thermisch und chemisch ungewöhnlich stabil. Zum Beispiel konnten Lösungen von homochiralem 5 bisher nicht thermisch racemisiert werden. Selbst nach dem 2.5-stündigen Erhitzen einer Lösung von (S)-(+)-5 in Tetralin unter Rückfluß (Sdp. 207°C) in einer Argon-Atmosphäre, ist die spezifische Drehung unverändert und Chiralphasen-HPLC-Analyse des entsprechenden Phosphinoxids 4 ergibt noch 100% ee. Die Enantiomeren von 11 (Schmp. 310 - 312°C) werden nach 16-stündigem Rühren in einer Lösung aus überschüssigem Kaliumcyanid in Wasser / Methanol / Dichlormethan unverändert zurückgewonnen. Es erfolgt keinerlei Spaltung zum freien Diphosphin und Kaliumtetracyanopalladat. Die extrem hohe thermische Konfigurationsstabilität des homochiralen Diphosphins 5 und die hohe thermische und chemische Stabilität seiner Übergangsmetallkomplexe (wie z.B. 11) ist eine wesentliche Grundlage für ungewöhnlich breite Einsatzmöglichkeiten letzterer als Katalysatoren organischer Reaktionen. Die ungewöhnliche hohe Resistenz gegenüber thermischer Racemisierung garantiert den Erhalt der vollen optischen Induktion entsprechender Katalysatoren auch bei hohen Reaktionstemperaturen. Die hohe chemische Resistenz ermöglicht prinzipiell den Einsatz des Katalysators in Gegenwart ungewöhnlich aggressiver Reagentien.

Im nachfolgenden werden die Vorteile der allgemein einsetzbaren Katalysatoren an konkreten, besonders bevorzugten Beispielen erläutert. Die spezifische Rotation z.B. des optisch reinen Diphosphins (S)-(+)-5 (Verbindung der Formel II) variiert dramatisch in unterschiedlichen Lösungsmitteln (Tabelle 1). Zum Beispiel wird die Richtung der optischen Drehung von +114.9° zu -73.9° umgekehrt, wenn man das Lösungsmittel Toluol durch Tetralin ersetzt. Die Bedeutung dieses bisher unbekannten Phänomens für die durch entsprechende Übergangsmetall-Komplexe bewirkte asymmetrische Katalyse ist noch nicht geklärt. Der genannte Umstand erlaubt, die optische Induktion durch Lösungsmittel-Variation stark und gezielt zu beeinflussen und das Reaktionsprodukt mit dem gleichen Katalysator in beiden Absolutkonfigurationen herzustellen, je nachdem welches Lösungsmittel man verwendet.

**Tabelle 1:**

| Spezifische Drehung [a]_{D}²⁵ von (S)-(+)-5, gemessen in unterschiedlichen Lösungsmitteln. | | |
|---|---|---|
| [α]_{D}²⁵,(S)-(+)-5 | c | Lösungsmittel |
| +153.3 | 1.02 | THF |
| +145.3 | 0.47 | Dioxan |
| +123.7 | 1.03 | Dichlormethan |
| +114.9 | 0.99 | Toluol |
| +95.5 | 0.73 | Mesitylen |
| +46.7 | 1.04 | Chloroform |
| +21.4 | 0.64 | o-Xylol |
| -73.9 | 0.46 | Tetralin |

Der Rhodium(I)-Komplex von (R)-(-)-5 hat hohe katalytische Aktivität und Enantioselektivität z.B. bei der Hydroborierung von prochiralen Olefinen. Die Hydroborierung von p-Methoxystyrol 12 mit 2 Äquiv. Catecholboran in THF bei 0°C in Gegenwart von 2 mol% eines in situ - Katalysators aus (1,5-Cyclooctadien)(2,4-pentandionato)-rhodium(I) und (R)-(-)-5 ist innerhalb 1.5 Std. quantitativ. Oxidation mit überschüssigem Wasserstoffperoxid bei 25°C gibt 78% des Markownikov-Produkts 1-(4-Methoxyphenyl)ethanol 13 [77.8% ee der (R)-Konfiguration] und 22% des anti-Markownikov-Produkts 4-Methoxyphenethylalkohol 14 (Schema 3). Die Anwesenheit des Rhodium(I)-Komplexes des elektronenarmen, homochiralen Diphosphins 5 bewirkt somit eine drastische Erniedrigung der Aktivierungsenergie der Hydroborierung, kehrt die anti-Markownikov-Selektivität der Hydroborierung in eine Markownikov-Selektivität um und liefert den Produktalkohol selbst bei der technisch leicht realisierbaren Reaktionstemperatur von 0°C in einer wesentlich höheren optischen Reinheit als elektronenreiche Diphosphine bei -70 bis -20°C. Bei 0-25°C liefern elektronenreiche Diphosphine keine signifikante Induktion mehr.

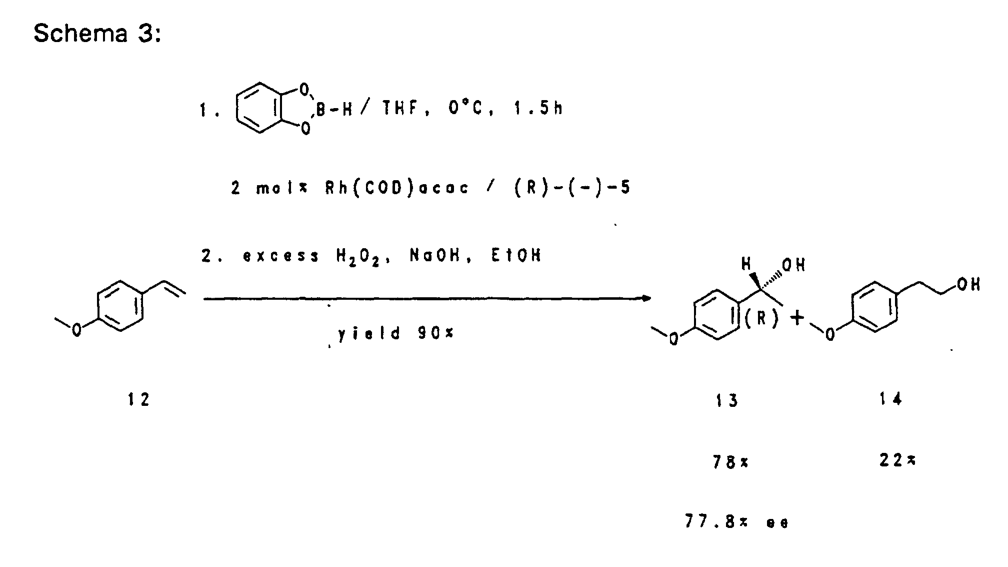

Der Rhodium(I)-Komplex von (R)-(-)-5 katalysiert Wasserstoff-Additionen an C=C - Doppelbindungen bei hohem Wasserstoffdruck. 2-Benzylidenbernsteinsäure-4[(4-BOC-amino)-1-piperidid] 37 wird bei 25°C unter 1 bar Wasserstoff in Gegenwart von 1 mol% des in situ - Katalysators aus Di-µ-chloro-bis(cycloocta-1c,5c-dien)-rhodium(I) und (R)-(-)-5 nicht hydriert. Ein in situ-Rh(I)-Komplex des homochiralen Diphosphins (R)-(-)5 bewirkt bei hohem Wasserstoffdruck asymmetrische Hydrierung (vgl. die Beispiele).

Die Palladium-Komplexe von (R/S)-5 mit Palladiumchlorid bzw. Palladiumacetat geben bessere Ausbeuten als entsprechende Palladium-Komplexe elektronenreicher Mono- oder Diphosphine bei Aryl-Aryl-Kupplungen von Arylboronsäureestern mit Arylhalogeniden im wäßrig / organischen Zweiphasengemisch (Suzuki-Kupplung). Sie ergeben ebenfalls bessere Ausbeuten bei Aryl-Vinyl-Kupplungen des Heck-Typs. Die Palladium-Katalysatoren (S,S)-(-)-10, (S,R)-(+)-10, (S)-(-)-11 und (R)-(+)-11 ergeben überlegene chemische und optische Ausbeuten bei asymmetrischen allylischen Substitutionen, Heck-Kupplungen und Ringschlußreaktionen.

### Beispiele

Reagentien, Geräte und allgemeine Methoden: Aceton (99,5%, Riedel-de Haën), 1,2-Bis(diphenylphosphin)ethan (99%, Aldrich), 1-Brom-3-Fluorbenzol (>99%, Aldrich), n-Butyllithium (15%ige Lösung in Hexanen, 1,6 N, Chemetall Gesellschaft), (-)-(2R,3R)-2,3-O,O'-Dibenzoyltartarsäure und deren (+)-(2S,3S)-Enantiomer (>99%, Fluka), Catecholboran (1,0 N Lösung in THF, Aldrich), (1,5-Cyclooctadien)(2,4-pentadionat)-rhodium(I) (99%, Aldrich), Di-µ-chlor-bis[(cycloocta-lc,5c-dien)-rhodium(I)], (S)-(+)-Di-µchlor-bis{2-[1-(dimethyl-amino)ethyl]phenyl-C,N}dipalladium (9) (98%, Aldrich), Dichlormethan (99,8%, Riedel-de Haen), Dichlormethylsilan Cl₂Si(CH₃)H (97%, Janssen), Diethylether (>99%, Hoechst), Wasserstoffperoxid (35% wässrige Lösung, Riedel-de Haën), Iod (99,8%, Riedel-de Haën), Mesitylen (99%, Fluka), Methanol (99,5%, 0,2% H₂O, Riedel-de Haën), Kaliumhexafluorphosphat (>98%, Fluka), Tetralin (99%, Aldrich), Toluol (>99%, <0,03% H₂O, Aldrich), Tri-n-butylamin (98%, Merck-Schuchardt), Trichlorsilan (99%, Aldrich), o-Xylol (99,5%, Riedel-de Haën) wurden wie gekauft eingesetzt.

Chlordiphenylphosphin ClPPh₂ (techn., 95%, Aldrich) (Siedepunkt 98-100°C / 0,2 Torr) und p-Methoxystyrol (97%, Aldrich) (Siedepunkt 41-42°C / 0,5 Torr) wurden unmittelbar vor der Verwendung unter Vakuum destilliert. Diisopropylamin (99%, Aldrich) und Diisopropylether (>99%, Hoechst) wurden unmittelbar vor der Verwendung aus Calciumhydrid in einer Argon-Atmosphäre destilliert (Karl-Fischer-Titration ergab <0,01% H₂O in iPr₂O und ≤0,05% H₂O in iPr₂NH). N,N-Dimethylformamid (DMF) wurde mehrere Tage in einem verschlossenen Kolben über aktivierten 4A Molekularsieben stehengelassen und dann unter Vakuum destilliert. Tetrahydrofuran (THF) wurde unmittelbar vor der Verwendung zur Trocknung durch ICN Aluminiumoxid B (Aktivität 1, 1 g/3 ml THF) geleitet (Karl-Fischer-Titration ergab < 0,01% H₂O).

Kupferpulver (99,8%, Riedel-de Haën) wurde nach dem folgenden Verfahren aktiviert:
260 g Kupferpulver wurden in eine Lösung von 52 g Iod in 2,6 1 Aceton gegeben und das Gemisch wurde 10 min gerührt. Das Kupfer wurde über einen Büchner-Trichter filtriert und 10 min in einer Lösung von 650 ml konzentrierter Salzsäure in 650 ml Aceton gerührt. Das Kupferpulver wurde filtriert, mit 3 × 200 ml Aceton gewaschen und unter Vakuum in einem Exsikkator getrocknet.

Alle Reaktionen wurden in trockener Glasapparatur in einer Argon-Atmosphäre gefahren.

Die Schmelzpunkte (Schmp.) wurden mit einem Büchi Kapillar-Schmelzpunktgerät (nach Dr. Tottoli) bestimmt und sind nicht korrigiert. HPLC: Kontron 420 Pumpe mit Kontron 425 Gradientenbildner, Kontron 360 Autosampler (20 µl Injektionsschleife), Kontron 432 HPLC UV-Detektor und Kontron 450-MT2 Datenverarbeitungssystem oder alternativ Spectra Physics SP 4200 Pumpe/8750 Organizer (10µl Injektionsschleife) mit SP 8700 Lösemittel-Dosiersystem, Spectra 100 UV-Vis Detektor und SP 4100 Computing Integrator. DC: mit Silikagel 60 F-254 (E.Merck) vorbeschichtete Glasplatten von 5 × 10 cm; Darstellung der Flecken mit Universal UV Lampe Camag (254 nm). Ultraschall-Reinigungsbad: Elma Transsonic TS540.

¹H-NMR (interner Standard TMS): Varian Gemini 200 (200 MHz), Bruker AM 400 (400 MHz) und Bruker ARX 500 (500 MHz). ¹³C-NMR (interner Standard TMS): Bruker AM 270 (67,93 MHz) und Bruker ARX 500 (125,77 MHz). ¹⁹F-NMR (interner Standard Fluortrichlormethan): Bruker AC 100 (94,2 MHz), Varian Gemini 200 (188,14 MHz), Bruker AM 400 (376,50 MHz) und Bruker ARX 500 (470,59 MHz). ³¹P-NMR (externer Standard 80 wässr. Phosphorsäure): Bruker AM 270 (109,35 MHz), Bruker AM 360 (145,79 MHz) und Bruker ARX 500 (202,46 MHz). Die angegebenen δ- und J-Werte für alle Verbindungen außer (R/S)-4, (S)-(-)-4 und (R)-(+)-4 entsprechen der üblichen Analyse erster Ordnung der Spektren. Alle NMR-Spektren von (R/S)-4, (S)-(-)-4 und (R)-(+)-4 wurden unter Einsatz von Entkoppelungsverfahren und der ¹H-¹³C-NMR-Korrelation (hsqc) vollständig analysiert. IR: Perkin Elmer 683 Spektrometer. MS: a) "fast atom bombardment" positive Ionisierung (+FAB): VG ZAB SEQ; NBA bezeichnet p-Nitrobenzylalkohol. b) "dissociation chemical ionization" (DCI): Kratos MS 80. c) "positive electrospray ionization" (+ESI): VG BIO-Q; Acetonitril/Wasser (1:1) + 0,5% Ameisensäure. Die optische Drehung wurde auf einem Perkin-Elmer 241 Polarimeter unter Verwendung einer Mikroküvette von 10 cm Länge bestimmt.

Die Röntgenstrukturen wurden anhand von in Lindemann-Glas-Kapillaren versiegelten Einkristallen ermittelt, wobei ein computergesteuertes Vierkreis-Diffraktometer (R3m/V, Siemens) eingesetzt wurde. 25 Reflexionen mit θ > 4° (für **4** und S,S-10) bzw. θ > 8° (für **7**) dienten der Bestimmung der Zelldimensionen. Das Phasenproblem wurde mit der direkten Methode gelöst , Minimierung von Σw(Fo²-Fc²)² , Gewichtungsschema w gemäß den Zählstatistiken.

### (3-Fluorphenyl)diphenylphosphinoxid (2)

Einer Lösung aus 1-Brom-3-fluorbenzol (1) (298,7 g, 1,7 Mol) in Diisopropylether (4,0 l) wurde bei -78°C innerhalb von 30 min über eine flexible Nadel eine 1,6 N Lösung von n-Butyllithium in Hexanen (1060 ml, 1,7 Mol) zugegeben. Die gelbe Suspension wurde für eine weitere Stunde bei -78°C gerührt. Chlordiphenylphosphin (394 g, 1,78 Mol) wurde tropfenweise innerhalb von 20 min bei -78°C bis -60°C zugegeben. Man ließ die gelbe Lösung sich innerhalb von 2 h auf 0°C erwärmen, wobei sie allmählich zu einer weißen Suspension wurde. Eine gesättigte wässrige Ammoniumchlorid-Lösung (1,0 l) wurde tropfenweise zugegeben. Die organische Schicht wurde getrennt, mit Salzlake gewaschen (2 × 700 ml), mit MgSO₄ getrocknet und dann filtriert. Das Lösemittel wurde unter Vakuum verdampft und der ölige Rückstand wurde im Hochvakuum getrocknet, bis die Kristallisierung einsetzte und eine blaßgelbe halbfeste Substanz ergab (479 g, 1,71 Mol, Ausbeute 100%). Dieses Rohprodukt wurde ohne Reinigung zu Phosphinoxid oxidiert. Eine Analysenprobe wurde durch Waschen des Rohprodukts mit Methanol erhalten, was farblose Kristalle von (3-Fluorphenyl)diphenylphosphin ergab, Schmp. 59-61°C, R_{f} 0,26 (Cyclohexan) [R_{f} von 1: 0,73], ¹H-NMR (200 MHz, CDCl₃): δ 6,84-7,17.(m, 3H), 7,20-7,60 (m, 11H); MS (DCI, CH₃OH): m/e (rel. Int.) 281 (M+H, 100), 280 (M, 83), 203 (M-C₆H₅,24); IR (KBr): 3070, 1602, 1580, 1475, 1437, 1415, 1216, 876, 791, 742, 694, 685 cm⁻¹.

In eine Suspension des Phosphins (476,5 g, 1,7 Mol) in Methanol (2,1 l) wurde tropfenweise bei <40°C 35%iges wässriges Wasserstoffperoxid (183 ml, 2,1 Mol) zugegeben. Nach Rühren der erhaltenen klaren gelben Lösung für 10 min bei 20°C zeigte die DC eine quantitative Reaktion (Ethylacetat / Isopropanol 20:1; R_{f} 2: 0,44; Phosphin: 0,75). Eine gesättigte wässrige Lösung von Natriumsulfit (640 ml) und iN-Salzsäure (300 ml) wurde zugegeben, und das Gemisch wurde gerührt, bis ein Test mit Iod-Stärkepapier die vollständige Reduktion des Wasserstoffperoxid-Überschusses anzeigte. Methanol wurde unter Vakuum verdampft, und Dichlormethan (4,0 1) wurde unter Rühren zugegeben. Die organische Schicht wurde getrennt, mit 2 × 1 l gesättigter Natriumbicarbonatlösung und mit 2 × 1 l Wasser gewaschen. Die organische Phase wurde getrocknet (MgSO₄) und das Lösemittel wurde unter Vakuum verdampft, so daß ein weißes Pulver zurückblieb (475 g). Es wurde mit Diisopropylether (900 ml) in einem Ultraschall-Reinigungsbad trituriert, filtriert und nochmals mit Diisopropylether (300 ml) gewaschen und unter Vakuum getrocknet: 441 g (1,49 Mol, 88% Ausbeute auf der Basis von **1**), Schmp. 143-145°C. Die HPLC [250 × 4,6 mm Lichrosorb RP 18 7 µm, 1 ml/min (630 ml CH₃CN + 370 ml H₂O + 0,1% NH₄OAc), det.: 254 nm, tᵣₑₜ 8,50 min] ergab eine Reinheit von 98,1%. ¹H-NMR (200 MHz, CDCl₃): θ 7,18 - 7,80 (m); MS (DCI, CH₃OH): m/e (rel.Int. 297 (M+H, 100) 296 (M, 11), 295 (M-H, 13); IR (KBr): 3055, 1583, 1440, 1228, 1188, 1122, 1110, 725, 708, 700, 690, 542, 511 cm⁻¹.

### (3-Fluor-2-iodphenyl)diphenylphosphinoxid (3)

Anmerkung: Es ist bei diesem Schritt absolut erforderlich, mit sorgfältig getrockneten Glasgeräten, THF und Diisopropylamin zu arbeiten und einen Iod-Überschuß zu vermeiden. Bereits die Gegenwart der in handelsüblichem Diisopropylamin enthaltenen 0,2% H₂O beeinträchtigte die Ergebnisse (jeweils 10-15% **2** und Diiodid **6** wurden nicht umgesetzt).

Einer Lösung von Diisopropylamin (176 ml, 1,24 Mol) in THF (1,0 1) wurde bei -70°C eine 1,6 N Lösung von n-Butyllithium in Hexanen (769 ml, 1,23 Mol) zugegeben. Man ließ die Lösung sich auf -20°C erwärmen und kühlte sie dann erneut auf -70°C ab. Diese klare gelbe LDA-Lösung wurde bei -70°C innerhalb von 25 min mit einer flexiblen Nadel in eine kalte (-78°C) Suspension von **2** (296,3 g, 1,0 Mol) in THF (2,0 1) eingegeben. Das Gemisch wurde 15 min bei -78°C gerührt, was eine orange-rote Suspension ergab. Eine Lösung von Iod (254 g, 1,0 Mol) in THF (1,0 l) wurde tropfenweise bei ≤ -70°C in 30 min zugegeben, was zu einer gelborangefarbenen dicken Suspension führte. Man ließ sie sich innerhalb 1,5 h auf 0°C erwärmen. Eine Lösung von Natriumthiosulfat (74 g) in Wasser (600 ml) wurde zugegeben, gefolgt von der Zugabe von Salzlake (1,2 l). Die organische Phase wurde getrennt und mit 3 × 1,2 l Salzlake gewaschen. Sie wurde getrocknet (MgSO₄), und das Lösemittel wurde unter Vakuum verdampft. Der Rückstand wurde mit Diisopropylether (1,0 l) in einem Ultraschall-Reinigungsbad (≈ 1 min) trituriert. Der Feststoff wurde filtriert und unter Vakuum getrocknet, was ein farbloses Pulver ergab (358g, 848 mMol, 85% Ausbeute), Schmp. 155-157°C. HPLC [250 × 4,6 mm Lichrosorb RP18 7µm, 1,5 ml/min (630 ml CH₃CN + 370 ml H₂O + 0,1% NH₄OAc), det.: 220 nm] ergab 0,6% 2 (tᵣₑₜ 4,41 min), 97,8% 3 (tᵣₑₜ 4,71 min), 1,6% 6 (tᵣₑₜ 7,47 min). ¹H-NMR (200 MHz, CDCl₃): δ 6,97 (ddd, ³J_{H,P}=13 Hz, ³J_{H,H}=7 Hz, ⁴J_{H,H}=1 Hz, 1 H), 7,15 - 7,38 (m,2H), 7,40 - 7,80 (m, 10H); ¹⁹F {¹H}-NMR(94,2 MHz, CDCl₃): δ -87,3 (d, ⁴J_{F,P}=6,8 Hz); ¹⁹F-NMR (94,2 MHz, CDCl₃): δ -87,3 (td, ⁴J_{F,P}≈³J_{F,H}≈7,0 Hz, ⁴J_{F,H}=5,2 Hz); MS (DCI): m/e (rel.Int.) 423 (M+H, 100); IR (KBr): 2920(w), 1437, 1400, 1244, 1182, 1117, 791, 718, 697, 542, 520 cm⁻¹.

Bei den Produkten von Testreaktionen, die [aufgrund von Spuren von Wasser in den Reagentien und eines Iod-Überschusses (1,13 Äquiv.)] bis zu 15% Diiodid **6** enthielten, wurden die charakteristischen spektralen Signale beobachtet: 1H-NMR (200 MHz, CDCl₃): δ 6,68 (dd, ³J_{H,P}=12,5 Hz, ³J_{H,H}=9 Hz); ¹⁹F{¹H}-NMR (94,2 MHz, CDCl₃): δ -65,8 (d, ⁴J_{F,P}=5,9 Hz); ¹⁹F-NMR (94,2 MHz, CDCl₃): δ -65,8 (≈t, ⁴J_{F,P}=5,9 Hz, ⁴J_{F,H}=5,7 Hz); MS (+ESI): m/e 549 (M+H).

### (RS)-(6,6'-Difluorbiphenyl-2,2'-diyl)bis(diphenylphosphinoxid) ((R/S)-4)

Ein Gemisch aus **3** (350 g, 829 mMol), aktiviertem Kupferpulver (163 g, 2,56 Mol, vgl. Reagentien und Geräte) und DMF (1,7 1) wurde bei 140°C (Ölbad-Temperatur) 1,5 h lang gerührt. Das Gemisch wurde auf Umgebungstemperatur abgekühlt, und das Lösemittel wurde unter Vakuum bei 70°C bis zur Trockne verdampft. Der Rückstand wurde durch wiederholtes Rühren mit heißem Dichlormethan (4 × 2 l) extrahiert. Die filtrierten Extrakte wurden zusammengegeben und bis zur Trockne eingedampft, und der Rückstand wurde im Hochvakuum getrocknet, was einen Feststoff ergab (223 g, Ausbeute 91%), der nach der HPLC [Bedingungen wie für 3 beschrieben] aus 92% **4** (tᵣₑₜ 7,25 min) und 8% 2 (< 0,1% **3**) bestand. Die Ultraschallbehandlung in Dichlormethan (1,3 l) für 1 min ergab einen farblosen Feststoff (173 g, Ausbeute 71%), Schmp. 280-282°C, >99,5% **4**. Eine Analysenprobe wurde erhalten durch Rekristallisierung, indem Dichlormethan/Ethylacetat (3:1) unter Rückfluß gekocht wurden, um Kristalle zu erhalten, Schmp. 283-284°C. NMR-Spektren waren identisch mit denen der optisch reinen Verbindungen **(S)-(-)-4** und **(R)-(+)-4** (siehe unten). MS (+FAB, MeOH/NBA): m/e (rel.Int.): 591 (M+H, 100) 513 (M-Ph, 7), 389 (M-Ph₂PO, 17), 201 (Ph₂PO, 27); IR (KBr): 3058 (w), 1436, 1422, 1240, 1206, 1192, 1117, 742, 695, 566, 532 cm⁻¹.

Für die Röntgenanalyse geeignete Kristalle wurden durch Rekristallisierung aus kochendem Toluol erhalten. Kristall von 0,31 × 0,18 × 0,17 mm³; Zelldimensionen: a = 26,570(4), b = 12,840(4), c = 20,296(3)Å, β=120,04 (1)°; C2/c,Z = 8, Dₓ = 1,309 Mg/m³; λ(Mo K_{α}) = 0,7107 Å, θₘₐₓ = 25,06°, 5107 einzelne Reflexionen, 3117 mit (Fo) >4σ; 379 Parameter, wR2 = 0,154 (alle Reflexionen), R1 = 0,046 (3117 Reflexionen), S = 0,92, Maximum und Minimum in der Differential-Fourier-Synthese: 0,46, -0,39 e/Å³.

### (RS)-(6,6'-Difluor-5-iod-biphenyl-2,2'-diyl)bis(diphenylphosphinoxid) (7)

Die Reaktion von Monoiodid **3**, das 14% Diiodid **6** enthält, unter denselben Ullmann-Koppelungsbedingungen ergab ein aus 89% **4**, 10% 7 und 1% eines nicht identifizierten Bestandteiles bestehendes Produkt. 31,5 g dieses Gemisches wurden über 3 kg RP18 Silikagel chromatographiert (Eluent Methanol/Wasser 1:1) und ergaben nach Rekristallisierung aus heißem Dichlormethan/Ethylacetat (3:1) 2,7 g 7, farblose Nadeln, Schmp. 272-274°C, HPLC (Bedingungen wie für 3 beschrieben, tᵣₑₜ 11,69 min): >99%. ¹H-NMR (500 MHz, CDCl₃): δ 6,78 (dd, ³³J_{H,P}=13,0 Hz, ³J_{H,H}=8,4 Hz, 1H), 7,06 (ddd, ³J_{H,P}=13,0 Hz, ³J_{H,H}=8,0 Hz, ⁴J_{H,H}=1,2 Hz, 1H), 7,12 (br t, ³J_{H,F}≈³J_{H,H}≈8,5 Hz, 1H), 7,30-7,36 (m, 5H), 7,40-7,48 (m, 6H), 7,50-7,56 (m, 2H), 7,58-7,68 (m, 8H), 7,70 (ddd, 1H); ¹⁹F{¹H}-NMR (94,2 MHz, CDCl₃): δ -89,6 (dt, ⁴J_{F,P}= 6,3 Hz, ⁵J_{F,P}=0,9 Hz, ⁵J_{F,F}=0,9 Hz), -110,3 (dt, ⁴J_{F,P}=6,9 Hz, ⁵J_{F,P}=0,8 Hz, ⁵J_{F,F}=0,9 Hz); ¹⁹F-NMR (94,2 MHz, CDCl₃): δ -89,6 (br t, ⁴J_{F,P}=⁴J_{F,H}=6,3 Hz), -110,3 (br qua, ⁴J_{F,P}≈³J_{F,H}≈ ⁴J_{F,H}≈7,0 Hz); ³¹P{¹H}-NMR (109,35 MHz, CDCl₃): δ +28,47 (d, ⁴J_{P,F}=6,3 Hz), +28,58 (d, ⁴J_{P,F}=6,9 Hz); MS (DCI, MeOH): m/e (rel.Int.) 717 (M+H, 85), 515 (M - Ph₂PO); IR (KBr): 3057 (w), 1438, 1393, 1203, 1118, 705, 695, 533 cm⁻¹. Eine Grundlinientrennung der Enantiomere von 7 [tᵣₑₜ 20,34 (+)-Isomer und 22,14 min (-)-Isomer] wurde auf einer 250 × 4,6 mm Säule DNBPG-Bakerbond mit dem Eluenten n-Heptan/Ethanol 15:1 erhalten.

Für die Röntgenanalyse geeignete Kristalle wurden mittels Rekristallisierung aus kochendem Dichlormethan erhalten. Kristall 0,45 × 0,45 = 0,3 mm³; Zelldimensionen: a = 10,462(1), b = 14,579(1), c = 20,467(2) Å; P2₁2₁2₁, Z = 4, Dₓ = 1,524 Mg/m³; λ(MoK_{α}) = 0,7107 Å, θₘₐₓ = 28,06°, 7569 einzelne Reflexionen, 7063 mit (Fo)>4σ; 488 Parameter, wR2 = 0,065 (alle Reflexionen), R1 = 0,023 (7063 Reflexionen), S = 0,67, Maximum und Minimum in der Differential-Fourier-Synthese: 0,53, -0,26 e/Å³.

### Versuch der Auflösung von (R,S)-4 mit (-)-(2R,3R)-2,3-O,O'-dibenzoyltartarsäure

a) Die Lösung von (2R,3R)-(-)-Di-O-benzoyltartarsäure (951 mg, 2,53 mMol) in Ethylacetat (6 ml) wurde der Lösung von (R/S)**-4** (815 mg, 1,38 mMol) in kochendem Dichlormethan (15 ml) zugegeben. Die Lösung wurde 3 h unter Rückfluß gekocht. Es bildete sich kein Präzipitat. Die Lösung wurde bei 20°C über Nacht stehengelassen. Es bildete sich kein Präzipitat.
b) (2S,3S)-(+)-Di-O-benzoyltartarsäuremonohydrat (1,70 g, 4,50 mMol) und (R/S)**-4** (2,00 g, 3,35 mMol) wurden in Dichlormethan (30 ml) gelöst. n-Heptan (13 ml) wurde unter Rühren tropfenweise zugegeben. Das trübe Gemisch wurde 30 min stehengelassen und es bildeten sich zwei Schichten. Die Schichten wurden getrennt und beide wurden unabhängig voneinander mit 2 N-Natriumhydroxid (2 × 15 ml) und mit Wasser (2 × 15 ml) gewaschen. Die organischen Lösungen wurden getrocknet (MgSO₄) und die Lösemittel wurden unter Vakuum verdampft. Obere Schicht: farbloser Feststoff (0,98 g), (R/S)**-4** (<1% ee) entsprechend der optischen Drehung (365 nm, c = 0,56, CH₃OH) und HPLC der chiralen Phase. Untere Schicht: farbloser Feststoff (0,75 g), (R/S)**-4** (<1% ee) entsprechend der optischen Drehung und HPLC der chiralen Phase.

### (RS)(6,6-Difluorbiphenyl-2,2'-diyl)bis(diphenylphosphin) ((R/S)-5)

**a)** Durch Reduktion von (RS)**-4** mit Trichlorsilan: Einer Suspension von (R/S)-4 (64,3 g, 109 mMol) in des desoxygeniertem Xylol (900 ml) wurden Tri-n-butylamin (150 ml, 638 mMol) und Trichlorsilan (43 ml, 426 mMol) zugegeben. Die Suspension wurde bis zum Rückfluß erhitzt (138°C) und ergab eine klare Lösung. Sie wurde für 18 h auf leichtem Rückfluß gehalten. Nach einer Reaktionszeit von 9 h wurden zusätzliches Tri-n-butylamin (150 ml, 638 mMol) und Trichlorsilan (10 ml, 99 mMol) zugegeben. Die DC (EtOAc/ MeOH 19:1) ergab eine quantitative Umsetzung von **4** (Rf 0,30) zu **5** (Rf 0,86) und eine geringe Menge Monooxid (R_{f} 0,77). Das Reaktionsgemisch wurde auf 0°C abgekühlt. Desoxygenierte 30%ige wässrige Natriumhydroxid-Lösung (400 ml) und Dichlormethan (500 ml) wurden zugegeben und das Gemisch wurde bei 60°C gerührt, bis die organische und die wässrige Schicht klar wurden (30 min). Die wässrige Schicht wurde über eine Kanüle entfernt und die organische Schicht wurde mit desoxygenierter 30%iger wässriger Natriumhydroxid-Lösung (400 ml), Wasser (3 × 400 ml) und Salzlake (400 ml) gewaschen, getrocknet (MgSO₄), filtriert und unter Vakuum verdampft. Der Rückstand wurde im Hochvakuum getrocknet, dann in Dichlormethan (1,1 l) gelöst und anschließend wurde Cyclohexan (1,1 1) zugegeben. Die Lösung wurde durch eine Schicht (30 cm hoch) von Silikagel (35-70 µm, 850 g) filtriert und die Schicht wurde mit Dichlormethan / Cyclohexan (1:1, 3,0 l) gewaschen. Die Filtrate wurden unter Vakuum verdampft, und es entstand ein farbloser Feststoff (48,0 g, 86,0 mMol, Ausbeute 79%), Schmp. 215-217°C, die HPLC (250 × 4,6 mm Nucleosil 120 C8 7µm, 1 ml/min 85% Acetonitril/15% Wasser, det. 254 nm, Injektion von 10 µl einer Lösung aus 1,0 mg 5 und 5 ml CH3CN mit Ultraschallbehandlung, tᵣₑₜ 14,50 min) ergab eine Reinheit von >99%. Eine Analysenprobe wurde mittels Rekristallisierung aus kochendem Toluol/Ethanol (4:5) erhalten: Schmp. 222-223°C; ¹H-NMR (200 MHz, CDCl₃) δ 6,83-6,98 (m, 4H), 7,10-7,40 (m, 22H); ¹⁹F-NMR (188,14 MHz, CDCl₃): δ -112,6 (m); ³¹P{¹H}-NMR (109,35 MHz, CDCl₃): δ -12,70 (t, ⁴J_{P,F}≈⁵J_{P,F}≈9,3 Hz); MS (DCI, CHCl₃) m/e (rel. Int.) 559 (M+H, 53), 373 (M-PPh₂, 100); IR (KBr): 3035 (w), 1562, 1446, 1432, 1417, 1234, 790, 742, 693 cm⁻¹.
**b)** Durch Reduktion von (R,S)**-4** mit Dichlormethylsilan: In einem zylindrischen Glaseinsatz für einen Stahl-Autoklaven wurde (R/S)**-4** (13,47 g, 22,8 mMol) in o-Xylol (150 ml) suspendiert. Man ließ Argon 10 min lang durch die Suspension durchperlen. Dichlormethylsilan (11,9 ml, 13,1 g, 114 mMol) wurde zugegeben, anschließend Tri-n-butylamin (28,4 ml, 22,2 g, 121 mMol). Der Argon-gefüllte Glaseinsatz wurde in den Autoklaven gegeben. Stickstoff (5 bar) wurde eingepreßt, dann wurde der Druck sehr langsam reduziert. Stickstoff (100 bar) wurde eingepreßt, und der Autoklav wurde für 86 h auf eine Innentemperatur von 150°C aufgeheizt. Man ließ den Autoklaven auf Umgebungstemperatur abkühlen. Der Stickstoffdruck wurde dann abgebaut und der Glaseinsatz herausgenommen. Die DC eines aliquoten Teils des dunkelbraunen Reaktionsgemisches, verdünnt mit Dichlormethan, zeigte die saubere Bildung von **5** an, wobei sich die Rückstände von **4** und Monooxid nahe an der Nachweisgrenze bewegten. Alle flüchtigen Bestandteile wurden verdampft (Bad 60°C / < 20 mbar). Methanol (100 ml) wurde zu dem dunkelbraunen Rückstand zugegeben, und die Suspension wurde für 5 min im Ultraschall-Reinigungsbad behandelt. Der Feststoff wurde filtriert, mit Methanol (20 ml) gewaschen und unter Vakuum getrocknet, was ein weißliches Rohprodukt ergab (12,8 g, Ausbeute 100,5%), Schmp. 213-220°C. Isopropanol (30 ml) wurde zugegeben und die Suspension wurde für 1 min mit Ultraschall behandelt. Der Feststoff wurde filtriert und unter Vakuum getrocknet: farbloses Pulver (11,7 g, 21,0 mMol, Ausbeute 92%), Schmp. 221-223°C; Spektren identisch mit den unter **a)** beschriebenen.
**c)** Durch Reduktion von (R/S)**-7** mit Dichlormethylsilan: Die Reaktion von (R/S)-7 (1,14 g, 1,60 mMol), Dichlormethylsilan (918 mg, 7,98 mMol) und Tri-n-butylamin (1,55 g, 8,46 mMol) in o-Xylol (15 ml) unter denselben Bedingungen wie unter **b**) beschrieben ergab nach derselben Behandlung und Ultraschallbestrahlung in Methanol (10 ml) das Rohprodukt (908 mg, Ausbeute 102%) als weißlichen Feststoff, Schmp. 213-219°C. Die Ultraschallbestrahlung in Isopropanol (2 ml) ergab ein farbloses Pulver (808 mg, 1,45 mMol, Ausbeute 91%), Schmp. 221-223°C; Spektren identisch mit den unter **a**) beschriebenen.

### Auflösung von (R/S)-5 über Palladiumkomplexe 10 {(S)-2-[1-(Dimethylamino)ethyl]-phenyl-C,N}[(S)-(6,6'-difluorbiphenyl-2,2'-diyl)bis(diphenylphosphin)]palladium(II)-hexafluorphosphat (S,S)-(-)-10

Eine Suspension von (R/S)**-5** (4,36 g, 7,38 mMol) und (S)-(+)-Di-µ-chlorbis{2-[1-(dimethylamino)ethyl]phenyl-C,N}dipalladium (9) (2,19 g, 3,69 mMol) in desoxygeniertem Methanol (430 ml) wurde 2 h lang bei 25°C gerührt, bis eine fast klare, blaßgelbe Lösung entstand. Eine sehr geringe Menge ungelöster Stoffe wurde mittels Filtration entfernt. Eine Lösung von Kaliumhexafluorphosphat (680 mg, 3,69 mMol) in desoxygeniertem Wasser (430 ml) wurde tropfenweise zugegeben. Ein blaßgelber Feststoff wurde ausgefällt, und die Suspension wurde 4 h gerührt. Der Reaktionsverlauf konnte mittels DC überwacht werden (100% Isopropanol; R_{f}(R/S)**-5**: 0,72, (S,S)**-10**: 0,57, (S,R)**-10**: 0,37, **9:** 0,00). Die Präzipitate wurden mittels Filtration gesammelt, mit 50%iger desoxygenierter wässriger Methanollösung (300 ml) und dann mit Diethylether (150 ml) gewaschen. [Während diese Wäschen verworfen wurden, wurde das ursprüngliche Filtrat für die Isolierung von (S,R)-(+)**-10** aufbewahrt (vgl. nächster Absatz)]. Der blaßgelbe Feststoff wurde unter Vakuum getrocknet und ergab das rohe (S,S)**-10** (3,33 g, 3,48 mMol, Ausbeute 94% des theoretischen Wertes); Schmp. 218-220°C (dec.); [α]_{D}25 -198,6 (c 0,967, Aceton). ¹H-NMR-Signale seines Diastereomers (S,R)**-10** konnten nicht nachgewiesen werden, doch mittels DC (Diastereoselektivität > 98:2) wurden Spuren beobachtet. Der rohe Komplex wurde in desoxygeniertem Aceton (40 ml) gelöst und Diethylether (40 ml) wurde langsam zugegeben. Das Gemisch wurde 8 h in einem veschlossenen Kolben stehengelassen. Das Präzipitat wurde mittels Filtration gesammelt und unter Vakuum getrocknet: 2,83 g (2,95 mMol, Ausbeute 80% des theoretischen Wertes) blaßgelber Feststoff, Schmp. 223-225°C (dec.), [α]_{D}25 -203,2 (c 0,98, Aceton); ¹H-NMR (200 MHz, Aceton-d₆) δ 1,36 (d, J=6,5 Hz, 3H, NCHCH₃), 1,68 (d, J=2,5 Hz, 3H, NCH₃), 2.68 (m, ca. t, J=3,7 Hz, 3H, NCH₃), 5,54 (qua, J=6,5 Hz, 1H, NCHCH₃), 6,32 (≈t, J=7,0 Hz, 1H), 6,58 (≈qua d, J=8,0 und 1,0 Hz, 1H), 6,68-6,86 (m, 4H), 7,06-8,26 (m, 24H); ³¹P{¹H}-NMR (145,79 MHz, Aceton-d₆) δ -143,7 (sept, ¹J_{P,F}=707 Hz, PF₆-), +11,5 (dd, ²J_{P,P}=45 Hz, ⁴J_{P,F}=8 Hz), +35,3 (dd, ²J_{P,P}=45 Hz, ⁴J_{P,F}=7 Hz); ¹⁹F{¹H}-NMR (376,50 MHz, Aceton-d₆, die linke Seite der PF₆-Doublette wurde in Übereinstimmung mit Literaturangaben für NaPF₆ auf -70 ppm eingestellt) δ-70,9 (d, ¹J_{F,P}=707 Hz, 6F, PF₆-), -106,2 (ddd, ⁴J_{F,P}=7,3 Hz, ⁵J_{F,F}=5,9 Hz, ⁵J_{F,P?}=1,7 Hz), -106,4 (ddd, ⁴J_{F,P}=7,7 Hz, ⁵J_{F,F}=5,9 Hz, ⁵J_{F,P?}=1,7 Hz); MS (+FAB, MeOH/NBA): m/e (rel. Int.) 817 (16), 816 (32), 815 (30), 814 (71), 813 (43), 812 (100), 811 (67), 810 (27), 809 (2), 808 (3) [die Peaks m/e = 816, 814, 812, 811, 810, 808 entsprechen dem Kation C₄₆H₄₀F₂NP₂Pd des Salzes mit den Palladiumisotopen (natürliche Häufigkeit) ¹¹⁰Pd (43,2), ¹⁰⁸Pd (97,7), ¹⁰⁶Pd (100), ¹⁰⁵Pd (81,3), ¹⁰⁴Pd (40,1) bzw. ¹⁰²Pd (3,5)]; IR (KBr): 3060 (w), 1450, 1442, 1418, 841, 746, 697, 556, 502 cm⁻¹.

Kristall: 0,3 x 0,2 x 0,15 mm³; Zelldimensionen: a = 12,091 (1), b = 18,612 (4), c = 18,958 (2) Å; P2₁2₁2₁, Z = 4, Dₓ = 1,391 Mg/m³; λ (Mo K_{α}) = 0,7107 Å, θₘₐₓ = 25,0°, 8124 einzelne Reflexionen, 4722 mit (Fo)>4σ; 533 Parameter, wR2 = 0,076 (alle Reflexionen), R1 = 0,047 (4722 Reflexionen), S = 0,83, Maximum und Minimum in der Differential-Fourier-Synthese: 0,88, -0,61 e/Å³.

### {(S)-2-[1-(Dimethylamino)ethyl]-phenyl-C,N}[(R)-(6,6'-difluorbiphenyl-2,2'-diyl)bis(diphenylphosphin)]palladium(II)-chlorid (S,R)-(+)-10

Das Originalfiltrat der Zubereitung von (S,S)-(-)**-10** (siehe oben) wurde unter Vakuum verdampft und ergab einen blaßgelben Feststoff (3,25 g, 3,83 mMol, Ausbeute 104% des theoretischen Wertes); Schmp. 162-165°C (dec); [α]_{D}25 + 184,3 (c 1,02, Methanol). ¹H-NMR-Signale seines Diastereomers (S,S)**-10** konnten nicht nachgewiesen werden, und mit der DC (Diastereoselektivität >>99:1) wurden keine Spuren beobachtet. Der rohe Komplex wurde in desoxygeniertem Methanol (40 ml) aufgelöst und für 2 min unter Rückfluß gekocht. Desoxygeniertes Wasser (150 ml) wurde zugegeben und das Gemisch wurde in dem verschlossenen Kolben 8 h stehengelassen. Das Präzipitat wurde mittels Filtration gesammelt, mit desoxygeniertem Methanol/Wasser (1:8, 15 ml), Wasser (30 ml) gewaschen und unter Vakuum getrocknet: blaßgelbe Kristalle (3,00 g, 3,54 mMol, 96% Ausbeute) Schmp. 164-166°C (dec.), [α]_{D}²⁵ +208,0 (c 1,01, Methanol); ¹H-NMR (200 MHz, CD₃OD): δ 2,05 (d, J = 1,9 Hz, 3H, NCH₃), 2,17 (m, ca. t, J ≈ 3,3 Hz, 3H, NCH₃), 2,27 (d, J = 6,3 Hz, 3H, NCHCH₃), 3,58 (qui, J = 6,3 Hz, 1H,NCHCH₃), 6,26 (tdt, J = 7,5, 2,5 und 1,3 Hz, 1H), 6,44 (qua d, J = 7,5 und 0,8 Hz), 6,66-6,85 (m, 4H), 6,96-7,76 (m, 24H); ³¹P{¹H}-NMR (145,79 MHz, CD₃OD) δ +10,72 (dd, ²J_{P,P} = 44 Hz, ⁴J_{P,F} = 7,6 Hz), 33,21 (dd, ²J_{P,P} = 44 Hz, ⁴J_{P,F} = 7,5 Hz); ¹⁹F{¹H}-NMR (376,50 MHz, CD₃OD): δ -103,37 (qua, ⁴J_{F,P}≈⁵J_{F,F}≈6,8 Hz), -104,46 (≈ qua d, ⁴J_{F,P}≈⁵J_{F,F}≈6,8 Hz, ⁵J_{F,P?}≈2 Hz); MS (+FAB, MeOH/NBA): identisch mit MS von (S,S)-10.

### [(S)-(6,6'-Difluorbiphenyl-2,2'-diyl)bis(diphenylphosphin)]-palladium(II)-dichlorid (S)-(-)-11

Desoxygenierte 10 N-Salzsäure (12 ml) wurde der unter Rückfluß kochenden Lösung von (S,S)-(-)**-10** (1,12 g, 1,17 mMol) in desoxygeniertem Aceton (20 ml) zugegeben. Nach einigen Minuten bildete sich ein gelbes Präzipitat. Das Gemisch wurde 2 h unter Rückfluß gekocht und dann unter Vakuum auf 10 ml konzentriert. Desoxygeniertes Wasser (100 ml) wurde zugegeben, und man ließ Stickstoff durch die Suspension durchperlen (25°C, 10 min). Der Feststoff wurde mittels Filtration erhalten und mit Isopropanol/Wasser (1:1, 20 ml) 5 min lang gerührt. Der Feststoff wurde filtriert, mit Isopropanol/Wasser (1:1, 5 ml) gewaschen, unter Vakuum getrocknet und ergab leuchtend gelbe Kristalle (846 mg, 1,15 mMol, Ausbeute 98%), Schmp. 310-312°C (dec.), [α]_{D}25 -311,9 (c 0,495, Dichlormethan); die spezifische Drehung war unverändert, nachdem die Lösung 8 Tage bei Umgebungstemperatur stehengelassen worden war; ¹H-NMR (200 MHz, CDCl₃): δ 6,66-6,86 (m, 4H), 6,90-7,08 (m, 2H), 7,27-7,56 (m, 12H), 7,70 (ddd, J = 12,5, 8,0, 2,0 Hz, 4H), 7,94 (dd, J = 12,5 und 8,0 Hz); ³¹P{¹H]-NMR (145,79 MHz, CDCl₃): δ 26,72 (br d, ⁴J_{P,F} = 6,0 Hz); ¹⁹F-NMR (188,14 MHz, CDCl₃): δ -108,5 (m); MS (+FAB, MeOH/NBA): m/e (rel. Int.) [705 (14), 704 (20), 703 (53), 702 (37), 701 (93), 700 (49), 699 (100), 698 (60), 697 (30) M-Cl für verschiedene Isotope von Pd und Cl], [668 (7), 667 (11), 666 (14), 665 (10), 664 (23), 663 (16), 662 (10) M-2Cl für verschiedene Isotope von Pd]; IR (KBr): 3060 (w), 1450, 1437, 1420, 747, 696, 507, 499, 487 cm⁻¹, Elementen-Analyse (gef./ber. für C₃₆H₂₆Cl₂F₂P₂Pd): C 58,9/58,76, H 3,8/3,56, Cl 9,6/9,64, F 4,7/5,16.

### [(R)-(6,6'-Difluorbiphenyl-2,2'-diyl)bis(diphenylphosphin)]-palladium(II)-dichlorid (R)-(+)-11

Desoxygenierte 10 N-Salzsäure (22 ml) wurde zu der unter Rückfluß kochenden Lösung von (S,R)-(+)-10 (408 mg, 0,48 mMol) in desoxygeniertem Aceton (20 ml) zugegeben. Nach einigen Minuten bildete sich ein gelbes Präzipitat. Das Gemisch wurde 2 h unter Rückfluß gekocht. Die Behandlung wie für (S)**-11** beschrieben ergab leuchtend gelbe Kristalle (346 mg, 0,47 mMol, 98% Ausbeute), Schmp. 310-311°C (dec.), [α]_{D}25 + 311,5 (c 0,495, Dichlormethan); die Spektren waren deckungsgleich mit denen von (S)**-11**.

### (S)-(6,6'-Difluorbiphenyl-2,2'-diyl)bis(diphenylphosphin) (S)-(+)-5

1,2-Bis(diphenylphosphin)ethan (dppe) (508 mg, 1,27 mMol, 0,8 Äquiv.) wurde einer Lösung von (S,S)-10 (1,53 g, 1,59 mMol) in desoxygeniertem Dichlormethan (20 ml) zugegeben. Die erhaltene klare Lösung wurde 16 h bei 20-25°C gerührt. Der Reaktionsverlauf konnte mittels DC überwacht werden [100% Toluol, R_{f}: (S,S)**-10** (0,00), dppe (0,61), **5** (0,80)], was eine quantitative Reaktion von dppe, die Gegenwart von **5** und einen Grundlinien-Fleck (Palladiumkomplexe) anzeigte. Desoxygeniertes Cyclohexan (20 ml) wurde zugegeben, und das Gemisch wurde über eine Fritte filtriert, die ein Bett aus Silikagel enthielt (35-70µm, 13,5 g). Das Silikabett wurde mit desoxygeniertem Dichlormethan/Cyclohexan (1:1, 4 × 20 ml) gewaschen. Die Filtrate wurden zusammengegeben und unter Vakuum eingedampft. Methanol (3 ml) wurde dem Rückstand zugegeben und das Lösemittel wurde unter Vakuum eingedampft; es entstand ein farbloser Feststoff (657 mg, 1,18 mMol, Ausbeute 93%), Schmp. 161-163°C. Eine Analysenprobe wurde durch Rekristallisierung (0°C, 12 h) aus kochendem Toluol/Ethanol (4:5), Schmp. 164-165°C, [α]_{D}25 + 114,9 (c 0,99, Toluol) hergestellt, vgl. Tabelle 1. Die NMR-Spektren waren deckungsgleich mit denen von (R/S)-5. Die DC und die HPLC [vgl. (R/S)-5] ergaben eine 100%ige chemische Reinheit. Die Oxidation zum Bis(phosphinoxid) (S)**-4** mit anschließender HPLC-Analyse der chiralen Phase ergab 100% ee (siehe unten). Als man (S,S)-10 unter denselben Bedingungen mit 1,0 Äquiv. dppe reagieren ließ, wurden beträchtliche Mengen von dppe nicht umgesetzt (DC) und es war schwierig, sie aus dem Reaktionsprodukt zu entfernen.

### Konfigurations-Stabilität von (S)-5 beim Erhitzen in Lösung

Eine Lösung von optisch reinem (S)**-5** (44,2 mg) in Tetralin (10 ml, Siedepunkt 207°C) wurde 2,5 Stunden lang in einer Argonatmosphäre unter Rückfluß gekocht. Die spezifische Drehung der Lösung blieb konstant und eine nach der Oxidation zu Bis(phosphinoxid) (S)**-4** genommene Probe ergab 100% ee nach HPLC-Analyse der chiralen Phase.

Die Konfigurations-Stabilität wurde ebenfalls beobachtet, nachdem eine Lösung von (S)**-5** in Toluol 12 Tage unter Argon stehengelassen wurde und diese Lösung dann für 8 h auf 100°C erhitzt wurde, und als eine Lösung von (S)**-5** in Mesitylen (Siedepunkt 164°C) 3 h lang unter Rückfluß gekocht wurde.

### Versuch der Herstellung von (S)-5 durch Reaktion von Palladiumdichlorid-Komplex(S)-11 mit Kaliumcyanid

Einer Lösung von (S)-11 (87 mg, 0,12 mMol) in Dichlormethan (10 ml) wurde Kaliumcyanid (30 mg, 0,46 mMol), Wasser (5 ml) und Methanol (10 ml) zugegeben (alle Lösemittel desoxygeniert). Die klare Lösung wurde 2 h lang gerührt. Die DC zeigte keine Bildung von **5** an. Kaliumcyanid (250 mg) wurde zugegeben und die Lösung wurde 16 h gerührt: keine Reaktion.

### (R)-(6,6'-Difluorbiphenyl-2,2'-diyl)bis(diphenylphosphin) (R)-(-)-5

In einem analogen Verfahren zu dem für (S)-(+)-5 beschriebenen ergab die Reaktion des Chlorids (S,R)-10 (748 mg, 0,88 mMol) mit dppe (282 mg, 0,71 mMol, 0,8 Äquiv.) in Dichlormethan (20 ml) die in der Überschrift angegebene Verbindung (390 mg, 0,70 mMol, Ausbeute 99%), Schmp. 164-165°C, [α]_{D}25 -114,8 (c 1,03, Toluol), NMR-Spektren deckungsgleich mit denen von (R/S)**-5** und (S)**-5**. Die DC und die HPLC ergaben eine 100%ige chemische Reinheit. Die Oxidation zu dem Bis(phos phinoxid) (R)**-4** mit anschließender HPLC-Analyse der chiralen Phase ergab 100% ee (siehe unten).

### (S)-6,6'-Difluorbiphenyl-2,2'-diyl)bis(diphenylphosphinoxid) (S)-(-)-4

Methanol (5 ml) und dann 35%ige wässrige Wasserstoffperoxid-Lösung (1 ml, 11,6 mMol) wurden der Lösung von (S)**-5** (101 mg, 0,18 mMol) in Toluol (2 ml) zugegeben. Das Gemisch wurde 4 h lang gerührt. Die DC [vgl. (R/S)-5] ergab die Verbindung aus der Überschrift und in Spuren Rückstände von 5 und Monooxid. Wasserstoffperoxid (1 ml) wurde zugegeben und 1 h weiter gerührt. Die DC zeigte nun eine quantitative Oxidation an. Die Lösung wurde mit gesättigter wässriger Natriumsulfit-Lösung (3 × 3 ml) und 1 N-Salzsäure (2 × 2 ml) gewaschen. Das Lösemittel wurde unter Vakuum verdampft. Der Rückstand wurde mit Chloroform (3 × 15 ml) extrahiert. Die Extrakte wurden zusammengegeben und mit gesättigter wässriger Natriumbicarbonat-Lösung (2 × 10 ml) und mit Wasser (2 × 10 ml) gewaschen und über Magnesiumsulfat getrocknet. Das Lösemittel wurde unter Vakuum verdampft und man erhielt einen farblosen Feststoff (100 mg, 0,17 mMol, Ausbeute 94%), Schmp. 275-277°C, [α]_{D}20 -11,8 (c 0,92, Chloroform).
¹H-NMR (Tabelle 2); ¹³C-NMR (Tabelle 3); ¹⁹F{¹H}-NMR (470,59 MHz, CDCl₃):δ-110,21 (J_{F,P}=6,6 Hz); ³¹P{¹H}-NMR (202,46 MHz, CDCl₃):δ 28,89 (J_{F,P}=6,6 Hz).

Die HPLC der chiralen Phase (250 × 4,6 mm DNBPG-Bakerbond, 1,0 ml / min n-Hexan + Ethanol (20 + 1), det. 254 nm) im Vergleich mit der racemischen Referenzprobe (R/S)-4 ergab 100% (S)**-4** (tᵣₑₜ 25,50 min) und 0% (R)**-4** (tᵣₑₜ 23,63 min). Eine Analysenprobe wurde erhalten durch Rekristallisierung (0°C, 12h) aus kochendem Dichlormethan / Ethylacetat (3:1), Schmp. 282-283°C, [α]_{D}20 -11,3 (c 0,96, Chloroform); [α]₃₆₅20 +57,0 (c 0,59, Methanol).

### (R)-(6,6'-Difluorbiphenyl-2,2'-diyl)bis(diphenylphosphinoxid) (R)-(+)-4

Analog dazu ergab die Oxidation von (R)**-5** einen farblosen Feststoff, Schmp. 282-283°C, [α]_{D}20 +11,3 (c 0,83, Chloroform); [α]₃₆₅20 -56,5 (c 0,57, Methanol). Die ¹H-, ¹³C{¹H}-, ¹⁹F{¹H}und ³¹P{¹H}-NMR-Spektren in CDCl₃ waren deckungsgleich mit denen von (S)**-4** und (R/S)**-4**. Die HPLC der chiralen Phase ergab 100% (R)-4.

### Durch Rhodium(I)-(R)-(-)-5 katalysierte asymmetrische Hydroboration/Oxidation von p-Methoxystyrol

Die Lösung von p-Methoxystyrol **(12)** (671 mg, 5,0 mMol), (1,5-Cyclooctadien)(2,4-Pentandionat)-rhodium(I) (31,0 mg, 0,10 mMol) und (R)-(-)**-5** (61,4 mg, 0,11 mMol) in desoxygeniertem, trockenem THF (6 ml) wird 90 min unter Argon unter Rückfluß gekocht. Die Lösung wird dann abgekühlt, und eine IN-Lösung von Catecholboran in THF (10,0 ml, 10,0 mMol), die zuvor mit Argon gespült wurde (10 min), wird innerhalb 5 min bei 0°C tropfenweise zugegeben. Das Gemisch wird 90 min bei 0°C unter Argon gerührt. Die DC (Cyclohexan/Ethylacetat 1:1; R_{f}**12:** 0,66, **13:** 0,41, **14:**0,30) zeigt die quantitative Reaktion von **12**. Die Lösung wird auf -20°C abgekühlt und Ethanol (10 ml), 4N wässrige Natriumhydroxid-Lösung (5 ml) und 36%ige wässrige Wasserstoffperoxid-Lösung (10 ml) werden nacheinander bei ≤ 5°C zugegeben. Das Gemisch wird über Nacht bei Umgebungstemperatur gerührt und dann mit Diethylether (3 × 50 ml) extrahiert. Die Extrakte werden zusammengegeben und mit IN-Natriumhydroxid (4 × 25 ml), mit Wasser (20 ml) und mit Salzlake (20 ml) gewaschen, über Natriumsulfat getrocknet, und das Lösemittel wird verdampft. Der Rückstand (780 mg blaßbraunes Öl) wird einer molekularen Destillation unterzogen (Bad 60-80°C / ≈ 10⁻³Torr) und ergibt ein farbloses Öl (682 mg, 4,48 mMol, Ausbeute 90%) und einen braunen Rückstand, der kristallisiert (98 mg). DC und ¹H-NMR zeigen, daß das Destillat aus **13** und **14** (Verhältnis 78:22) besteht, [α]_{D}20 +27,7 (c 1,17, Chloroform). Korrektur für 22% achirale **14** ergibt [α]_{D}20_{corr} +35,5 (c 0,91, Chloroform). Ein Vergleich mit der Literatur zeigt, daß 13 ≈67% ee der (R)-Konfiguration aufweist. Die HPLC-Analyse der chiralen Phase [250 mm Länge, 4,6 mm Innendurchmesser, Säule Chiralcel OD 10 µm (Daicel); 0,5 ml/min n-Hexan/Ethanol (100 + 0,8), 40°C, det. 254 nm] ergibt 68,3% (R)-(+)-13 (tᵣₑₜ 62,80 min), 8,5% (S)-(-)**-13** (79,40 min) und 23,2% **14** (66,14 min). Dies entspricht 77,8% ee des (R)-(+)-Isomeren von 13.

### Hydrogenierung von 2-Benzylidensuccinsäure 4-[(4-BOC-amino]-1-piperidid, katalysiert durch den neutralen Rhodium(I)-(R)-(-)-5-Komplex

(R)-(-)**-5** (30,1 mg, 0,054 mMol) wird der Suspension von Di-µ-chlor-bis[(cycloocta-1c,5c-dien)-rhodium(I)] (12,3 mg, 0,025 mMol) in desoxygeniertem Methanol/Benzol (3:1) (20 ml) zugegeben und unter Argon gerührt, so daß innerhalb 15 min eine klare Lösung entsteht. In einem Hydrogenierungskolben wird 2-Benzylidensuccinsäure-4-[(4-BOC-amino)-1-piperidid (1,94 g, 5,0 mMol) in desoxygeniertem Methanol/Benzol (3:1) (20 ml) gelöst. Die klare Katalysatorlösung wird unter Argon zugegeben und das Reaktionsgemisch wird unter 1 bar Wasserstoff aus einem hydrostatischen Hydrogenierungsgerät⁵³ geschüttelt: innerhalb von 6 h wird kein Wasserstoff aufgenommen. Der Hydrogenierungskolben wird unter Argon in einen Schüttelautoklaven gegeben ; man läßt 150 bar Wasserstoff 2 Tage einwirken. Das Lösemittel wird unter Vakuum verdampft und der feste Rückstand wird in tert-Butyl-methylether (40 ml) gelöst. Die kalte (0°C) Lösung wird mit 0,5N-Salzsäure (10 ml) und mit Wasser (10 ml) gewaschen und getrocknet (MgSO₄). Das Lösemittel wird verdampft, und man erhält einen Feststoff (1,80 g, 4,16 mMol, 92% Rohausbeute). Die HPLC⁵³ zeigt eine quantitative Hydrogenierung. Die HPLC der chiralen Phase⁵³ ergibt 22% ee der (R)-(+)-Konfiguration.

## Patentansprüche

1. Verbindungen der Formel II 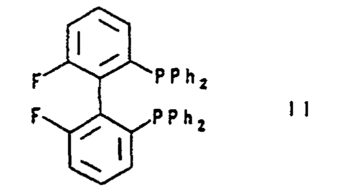 in der die Phenylringe des Biphenylmoleküls mit bis zu 6 zusätzlichen Fluorund/oder Chloratomen substituiert sein können.

2. Verfahren zur Herstellung der Verbindungen der Formel II gemäß Anspruch 1 **dadurch gekennzeichnet ist, daß** eine Verbindung der Formel 4 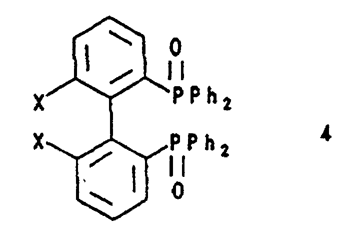 wobei X F bedeutet, mit Cl₂Si(CH₃)H, NBu₃, in einem organischen Lösungsmittel unter Inertgas umgesetzt wird oder alternativ mit HSiCl₃ und NBu₃ in einem organischen Lösungsmittel unter Rückfluß gekocht wird, wobei die Verbindung der Formel II entsteht und wobei die Phenylringe des Biphenylmoleküls mit bis zu 6 zusätzlichen Fluor und/oder Chloratomen substituiert sein können.

3. Verfahren zur Herstellung der Verbindung der Formel 4 gemäß Anspruch 2, das **dadurch gekennzeichnet ist, daß** eine Verbindung der Formel 3 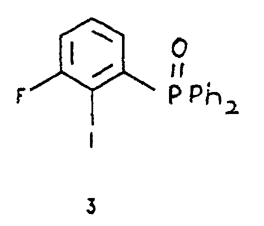 in einem inerten Lösungsmittel unter Zusatz eines Übergangsmetalls, vorzugsweise Cu, erhitzt wird, wobei die Verbindung der Formel 3 in 4-, 5- und/oder 6-Stellung mit bis zu 3 Fluor- und/oder Chloratomen substituiert sein kann.

4. Verfahren zur Herstellung der Verbindung der Formel 3 gemäß Anspruch 3, das **dadurch gekennzeichnet ist, daß** eine Verbindung der Formel 2 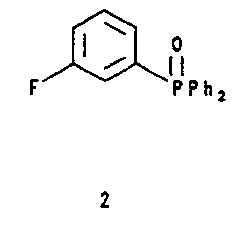 mit Lithiumdiisopropylamid in einem inerten Lösungsmittel, vorzugsweise in THF, und anschließend mit Jod umgesetzt wird, wobei die Verbindungen der Formeln 2 und 3 in 4-, 5- und/oder 6-Stellung mit bis zu 3 Fluor- und/oder Chloratomen substituiert sein können.

5. Verbindungen der Formel 4, 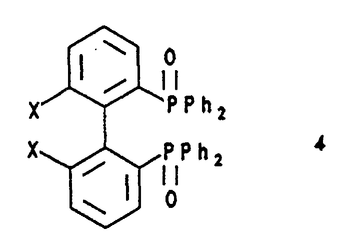 worin X F bedeutet und worin die Phenylringe des Bisphenylmoleküls mit bis zu 6 zusätzlichen Fluor und/oder Chloratomen substituiert sein können.

6. Rhodium(I)-, Ruthenium(II)-, Palladium(II)- und Palladium(O)-Komplexe mit Verbindungen der Formel II.

7. Verfahren zur Herstellung von Komplexen gemäß Anspruch 6, **dadurch gekennzeichnet, daß** eine Verbindung der Formel II gemäß dem Anspruch 1 mit geeigneten Komplexen mit leicht verdrängbaren Liganden umgesetzt wird oder daß die Komplexe durch HCl-induzierte Abspaltung des N,N-Dimethyl-a-Phenylethylamin-Liganden aus dem entsprechenden Palladium-Komplex erhalten werden.

8. Verwendung von Komplexen gemäß Anspruch 6 als Katalysatoren.

9. Verwendung von Komplexen gemäß Anspruch 6 als Katalysatoren symmetrischer oder asymmetrischer Additions-, Substitutions-, Umlagerungs- oder Kupplungsreaktionen.

## Claims

1. A compound of the formula II 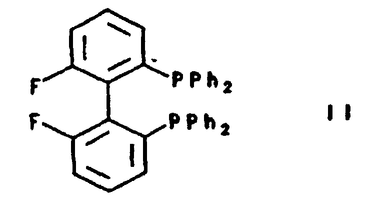 in which the phenyl rings of the biphenyl molecule can be substituted with up to 6 additional fluorine and/or chlorine atoms.

2. A process for the preparation of a compound of the formula II as claimed in claim 1, which comprises reacting a compound of the formula 4 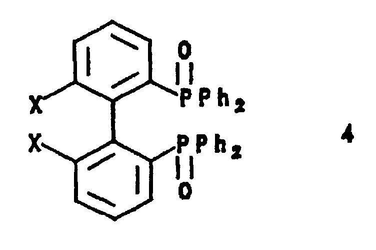 in which X is F, with Cl₂Si(CH₃)H, NBu₃, in an organic solvent under an inert gas or alternatively boiling the compound of the formula 4 under reflux with HSiCl₃ and NBu₃ in an organic solvent to give the compound of the formula II, where the phenyl rings of the biphenyl molecule may be substituted with up to 6 additional fluorine and/or chlorine atoms.

3. A process for the preparation of a compound of the formula 4 as in claim 2, which comprises heating a compound of the formula 3 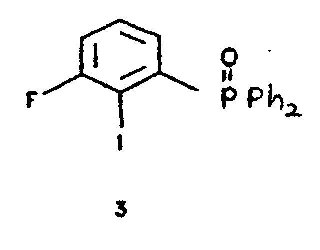 in an inert solvent with the addition of a transition metal, preferably Cu, where the compound of the formula 3 can be substituted in position 4, 5 and/or 6 with up to 3 fluorine and/or chlorine atoms.

4. A process for the preparation of a compound of the formula 3 as in claim 3, which comprises reacting a compound of the formula 2 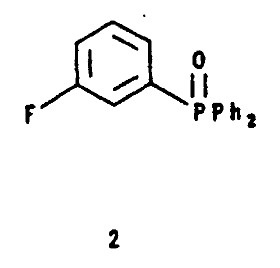 with lithium diisopropylamide in an inert solvent, preferably in THF, and then with iodine, where the compounds of the formulae 2 and 3 can be substituted in postiion 4, 5 and/or 6 with up to 3 fluorine and/or chlorine atoms.

5. A compound of the formula 4 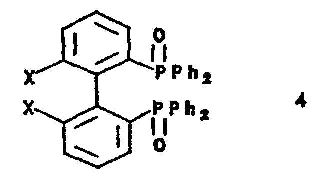 in which X is F and in which the phenyl rings of the biphenyl molecule can be substituted with up to 6 additional fluorine and/or chlorine atoms.

6. A complex of rhodium(I), ruthenium(II), palladium(II) or palladium(0) with a compound of the formula II.

7. A process for the preparation of a complex as claimed in claim 6, which comprises reacting a compound of the formula II as claimed in claim 1 with suitable complexes having readily displaceable ligands, or comprises obtaining the complexes from the corresponding palladium complex by HCl-induced elimination of the N,N-dimethyl-·-phenylethylamine ligand.

8. The use of a complex as claimed in claim 6 as a catalyst.

9. The use of a complex as claimed in claim 6 as a catalyst for symmetrical or asymmetrical addition, substitution, rearrangement or coupling reactions.

## Revendications

1. Composés de formule II 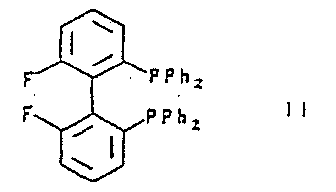 dans laquelle les cycles phényle de la molécule de biphényle peuvent être substitués par jusqu'à 6 atomes de fluor et/ou de chlore additionnels.

2. Procédé pour la préparation des composés de formule II selon la revendication 1, **caractérisé en ce qu'**on met à réagir un composé de formule 4 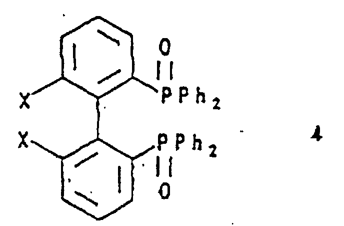 dans laquelle X représente F, avec Cl₂Si(CH₃)H, NBu₃, dans un solvant organique sous gaz inerte ou on chauffe à reflux en tant qu'alternative avec HSiCl₃ et NBu₃ dans un solvant organique, ce par quoi on obtient le composé de formule II et dans lequel les cycles phényle de la molécule de biphényle peuvent être substitués par jusqu'à 6 atomes de fluor et/ou de chlore additionnels.

3. Procédé pour la préparation du composé de formule 4 selon la revendication 2, qui est **caractérisé en ce qu'**on chauffe un composé de formule 3 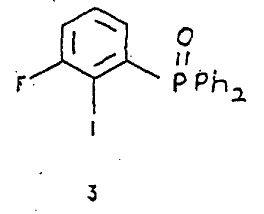 dans un solvant inerte en ajoutant un métal de transition, de préférence Cu, dans lequel le composé de formule 3 peut être substitué en position 4-, 5- et/ou 6-avec jusqu'à 3 atomes de fluor et/ou de chlore.

4. Procédé pour la préparation du composé de formule 3 selon la revendication 3, qui est **caractérisé en ce qu'**on met à réagir un composé de formule 2 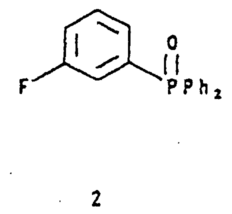 avec le diisopropylamide lithium dans un solvant inerte, de préférence dans le THF, et ensuite avec de l'iode, dans lequel les composé des formules 2 et 3 peuvent être substitués en position 4-, 5- et/ou 6- avec jusqu'à 3 atomes de fluor et/ou de chlore.

5. Composés de formule 4 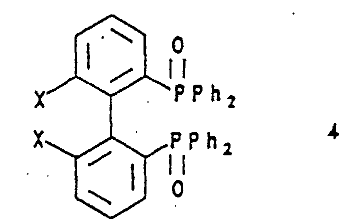 dans lesquels X représente F et dans lesquels les cycles phényle de la molécule biphényle peuvent être substitués par jusqu'à 6 atomes de fluor et/ou de chlore additionnels.

6. Complexes de rhodium(I), ruthénium(II), palladium(II) et palladium(0) avec des composés de formule II.

7. Procédé pour la préparation de complexes selon la revendication 6, **caractérisé en ce qu'**on met à réagir un composé de formule II selon la revendication 1 avec des complexes appropriés avec des ligands facilement déplaçables ou **en ce que** les complexes sont obtenus par clivage ihduit par HCl du ligand N,N-diméthyl-α-phényl-éthylamine à partir du complexe de palladium correspondant.

8. Utilisation de complexes selon la revendication 6 comme catalyseurs.

9. Utilisation de complexes selon la revendication 6 comme catalyseurs de réactions d'addition, de substitution, de réarrangement ou de couplage symétrique ou asymétrique.
